# EUROPEAN PATENT SPECIFICATION

(11) **EP 0 368 666 B1**
(45) Date of publication and mention of the grant of the patent: **03.04.1996**
(21) Application number: 89311625.1
(22) Date of filing: 09.11.1989
(51) Int. Cl.: H05B 6/64, F24C 7/02, C09D 5/00, B32B 27/00

(54) **Structure of film for high temperature cooking apparatus and method of formation thereof**
Struktur einer Schicht für Hochtemperatur-Kochgeräte und ihr Herstellungsverfahren
Structure d'une couche mince pour appareil de cuisson à haute température et son procédé de fabrication

(30) Priority: 09.11.1988 JP 283173/88; 24.04.1989 JP 104239/89; 30.06.1989 JP 170308/89; 09.10.1989 JP 263297/89
(43) Date of publication of application: 16.05.1990
(73) Proprietor: SHARP KABUSHIKI KAISHA, Osaka-shi Osaka 545 (JP)
(72) Inventor: Arai, Nobushige, Kitakatsuragi-gun Nara-ken (JP)
(74) Representative: Brown, Kenneth Richard

(56) References cited:
- EP-A- 0 199 020
- Japanese Patents Gazette, Section Ch: Chemical, Refractories, Ceramics - p. 71, Issued 9 Mar. 88 JP - 62 288 152(Matsushita Elec. Ind. K.K)
- PATENT ABSTRACTS OF JAPAN vol. 14, no. 117 (C-676) 17 January 89,& JP-A-12
- 061466 (SHOWA ELECTRIC WIRE & CABLE CO. LTD.) 18 October 89,
- PATENT ABSTRACTS OF JAPAN vol. 13, no. 379 (C-628) 22 August 89,& JP-A-01 129074 (SHARP CORP.) 22 May 89,
- Japanese Patents Gazette, Section Ch: Chemical, Metallurgy - p. 26, Issued 3Feb. 1988, JP - 62 255 138 (Nippon SteelCorp.)

## Description

The present invention relates generally to a structure of a film for a high temperature cooking apparatus and, more particularly, to the structure of the film with improved heat resistivity and non-tackiness. The invention further relates to a method of forming such a film structure.

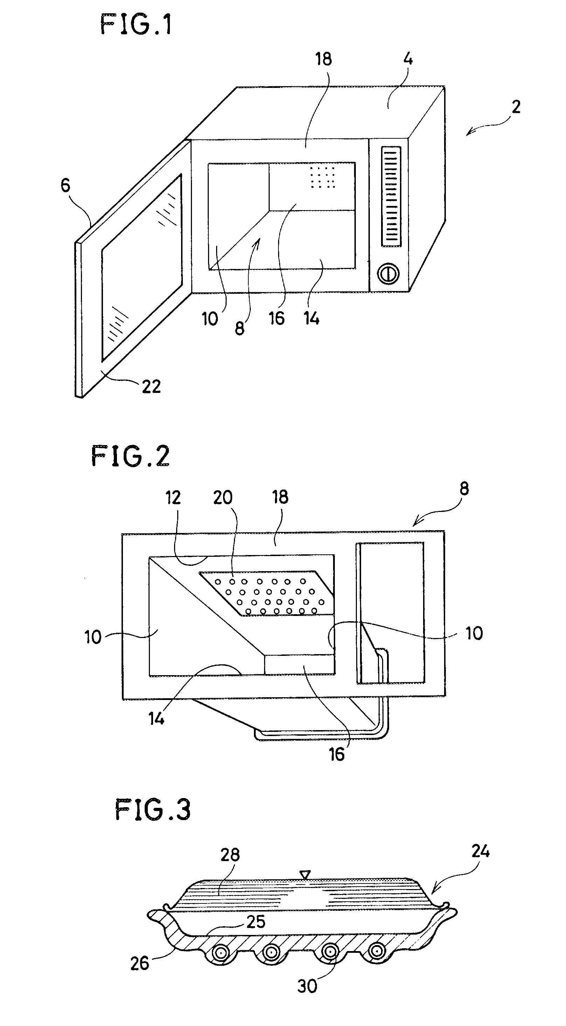

Fig. 1 is a perspective view of a microwave oven, and Fig. 2 is a perspective view of an inner compartment employed for the microwave oven. The microwave oven 2 comprises a main body 4 and a door 6. The inner compartment 8 is inserted in the main body 4. The inner compartment 8 comprises left and right sidewalls 10, 10, a top panel 12, a bottom panel 14, a rear panel 16 and a front panel 18. The top panel 12 comprises a high temperature heat irradiated portion 20 formed of a plurality of holes, for introducing heat of a heater (not shown) provided in the top panel 12 into the inner compartment 8.

Fig. 3 is a sectional view of an electric hot plate. The electric hot plate 24 comprises a plate 26 and a lid 28. Sheath heaters 30 are inserted in the plate 26. The plate 26 is formed of an aluminum alloy die casting material.

Referring to Figs. 2 and 3, for an inner surface of the inner compartment 8 of the microwave oven and for a cooking surface 25 of the plate 26 of the electric hot plate, there are employed a heat-resistive stainless steel sheet, an enameled steel sheet, or a steel sheet coated with a heat-resistive ceramic coating comprising a binder of a boro-siloxane resin, a silicone resin, a siloxane resin and the like, an inorganic pigment, a filling material and the like.

In a development of a high-temperature high-speed cooking apparatus, it is required to reduce a cooking time for making more tasty cooked food and for an effective use of the time. Accordingly, it is necessary to process food at a high temperature and to make the cooking surface 25, the inner surface of the inner compartment 8 of the oven, an inner face 22 of the door 6 all resistive to heat at a high temperature, with reference to Figs. 2 and 3. However, the conventional microwave oven and electric hot plate described above are insufficient in their resisting properties to heat at a high temperature.

In addition, the enameled steel sheet involves various disadvantages as follows. That is, since the enameled steel sheet need be burned at a high temperature of 400°C to 700°C, it is difficult to adjust the accuracy of its dimension. Further, the steel sheet cannot be thinned and thus becomes heavy, thereby to increase the overall weight of the microwave oven. Moreover, for preventing deflection due to thermal deformation, the enameled steel sheet requires a reinforcing rib or a diaphragm, and thus it is inferior in design. Also, the enamel coated on the steel sheet is liable to crack, resulting in a poor production yield. This enameled steel sheet is also expensive.

Further, as for the steel sheet coated with the heat-resistive ceramic coating, only a stainless sheet can be used as the steel sheet. Thus, employment of another steel sheet such as an aluminium-plated steel sheet or a zinc-plated steel sheet, a so-called inexpensive steel sheet, cannot obtain resisting properties to corrosiveness and contamination, adhesiveness of the coated film at a high temperature and so on. Therefore, the employment of stainless steel is indispensable, resulting in a high cost of the microwave oven.

The document JP-A-62 288152 discloses a film, for the surface of a heating element, containing polytitano-carbosilane, fluorine resin, filler and pigment.

According to one aspect of the present invention, there is provided a film for a high temperature cooking apparatus, provided on a substrate forming a surface for said high temperature cooking apparatus, the film comprising: a ceramic layer including ceramic poly-titano-carbosilane and a non-tacky resin, provided over said substrate; and a non-tacky resin layer including a non-tacky resin, provided on said ceramic layer; wherein the concentration of said non-tacky resin included in said ceramic layer progressively increases towards the upper surface of the ceramic layer.

According to another aspect of the present invention, there is provided a method of forming a film on a substrate forming a surface for a high temperature cooking apparatus, characterised by the steps of: blending a non-tacky resin into an organic solvent varnish including poly-titano-carbosilane, so as to form a coating material having a specific gravity of between approximately 1.1 and 1.8 and a non-volatile component of between approximately 50% and 70%; coating said coating material over said substrate; pre-drying the resultant coating; and sintering the coating at a temperature above 300°C so as to form a ceramic layer, including ceramic poly-titano-carbosilane, having a concentration of the non-tacky resin which progressively increases towards the upper surface thereof, such that the uppermost portion of the ceramic layer substantially comprises non-tacky resin.

Thus, embodiments of the present invention may provide a film for a high temperature cooking apparatus, which may be highly resistive to heat, may be manufactured at a low cost, may be highly resistive to being corroded, contaminated and scorched by food, may have a good adhesiveness so as not to cause peeling-off between layers, and/or may be capable of preventing a micro-crack which is a specific defect of ceramics.

The coated ceramic layer preferably comprises a heat-resistive pigment including a heat-resistive metal oxide or composite oxide.

The ceramic layer exhibits anti-corrosiveness and non-tackiness up to a temperature of 300°C, becomes totally ceramic at a temperature above 400°C to be durable up to 1000°C and changes in quality into a fine hard film resistive to a corrosion. Thus, this coated film can be utilized for the inner surface of the heating chamber of a microwave oven. Further, the coating can be coated on a low-cost steel sheet, resulting in a decrease in cost of the microwave oven.

The proportion of the poly-titano-carbosilane to the non-tacky resin layer successively changes in a vertical direction at an interface between the ceramic layer and the non-tacky resin layer. That is, a concentration of the non-tacky resin increases toward the upper layer portion of the ceramic layer, and may become 100% at the uppermost layer portion thereof.

Preferably, the non-tacky resin is a fluororesin in the film structure. Further, the ceramic layer preferably comprises a heat-resistive pigment including a heat-resistive metal oxide or composite oxide.

Since the non-tacky resin layer formed of a non-tacky resin is formed in the uppermost layer portion of the ceramic layer, even oil drops adhered to the film structure can easily be removed. Moreover, a body portion of the film structure is highly resistive to heat at a high temperature because it is formed of a ceramic layer including poly-titano-carbosilane which is made ceramic.

Since the proportion of non-tacky resin to poly-titano-carbosilane changes successively in a vertical direction at the interface between the ceramic layer and the non-tacky resin layer, the ceramic layer and the non-tacky resin layer have a good adhesiveness.

Since the fluororesin is included in the ceramic layer, the fluororesin layer provided on the ceramic layer and the ceramic layer are compatible with each other and thus are strongly bonded together. Further, since the fluororesin layer is reliably formed on the ceramic layer, the film has a good non-tackiness.

In the method of forming a film on a substrate forming a cooking surface or an inner surface of a heating chamber in a high temperature cooking apparatus, a non-tacky resin is first blended in an organic solvent varnish including poly-titano-carbosilane, thereby forming a coating. This coating is then coated on the substrate, and thereafter is sintered. A fluororesin is preferably employed as the non-tacky resin.

In the method, poly-titano-carbosilane, which serves as a binder, becomes ceramic to form an aggregate of minute particles, in sintering. At the same time, powders of the fluororesin are melted and rise to the surface due to a difference in specific gravities, and enter among ceramic particles. This leads a formation of such a structure that the fluororesin is filled among the ceramic particles, and further a film of a fluororesin with a high concentration is formed in the uppermost layer portion of the film structure.

In the method of forming a film on a substrate forming a cooking surface or an inner surface of a heating chamber in a high temperature cooking apparatus, a fluororesin is first blended in an organic solvent varnish including poly-titano-carbosilane, thereby forming an undercoating. The undercoating is then coated on the substrate, and thereafter volatilization of the organic solvent causes formation of an undercoated film on the substrate. Subsequently, a liquid coating of a dispersion-type fluororesin is coated on the undercoated film and is then sintered.

In the method, the fluororesin is reliably formed on the uppermost layer portion of the ceramic layer, resulting in a highly non-tacky film structure.

The foregoing and other features, aspects and advantages of the present invention will become more apparent from the following detailed description of the present invention when taken in conjunction with the accompanying drawings, in which:-
Fig. 1 is a perspective view of a microwave oven;
Fig. 2 is a perspective view of an inner compartment inserted in the microwave oven;
Fig. 3 is a sectional view of an electric hot plate;
Fig. 4A is a sectional view of a film structure before sintering, according to one embodiment of the present invention;
Fig. 4B is a sectional view of the film structure according to one embodiment of the present invention;
Fig. 5A is a sectional view of a film structure before sintering, according to another embodiment of the present invention;
Figs. 5B and 5C are sectional views of the film structure according to another embodiment of the present invention;
Fig. 6 is a sectional view of a film structure according to still another embodiment of the present invention;
Figs. 7A and 7B are sectional views illustrating a method of manufacturing a film structure, the method shown in Fig. 7B being in accordance with the present invention;
Figs. 8A and 8B are sectional views illustrating another example of the method of manufacturing the film structure of the present invention;
Figs. 9A and 9B are sectional views illustrating still another example of the method of manufacturing the film structure of the present invention;
Figs. 10A and 10B are sectional views illustrating a still further embodiment of the method of manufacturing the film structure of the present invention;
Figs. 11A and 11B are sectional views illustrating still another example of the method of manufacturing the film structure of the present invention;
Figs. 12A and 12B are sectional views illustrating a still further example of the method of manufacturing the film structure of the present invention; and
Figs. 13A and 13B are sectional views illustrating still another example of the method of manufacturing the film structure of the present invention.

Further detailed embodiments will now be described.

### Embodiment 1

This embodiment does not form part of the present invention.

As a coating, there is employed a resultant mixture of an organic solvent varnish including poly-titano-carbosilane (e.g., Tilanocoat supplied by Ubekosan Co., Ltd.) serving as a binder, and a mixture of a heat-resistive pigment comprising a metal oxide or a composite oxide including Fe, Co, Mn or Cr, a thickener such as aluminum silicate, a silicone oil, and an organic solvent such as toluene or xylene.

A general proportion of the mixture is shown in Table I below.

**Table I**

| | |
|---|---|
| Organic solvent varnish including Tilanocoat | 20 - 60 parts |
| Heat-resistive pigment | 20 - 30 parts |
| Thickener | 0.1 - 1.0 % |
| Silicone oil | 0.5 - 8 % |
| Organic solvent | 20 - 40 parts |

The above materials are preferably mixed such that a specific gravity of the coating is 1.3 - 2.8, and a nonvolatile component of the coating is 50 - 70 %.

The above coating turns black due to the component of the heat-resistive pigment. Then, the black component is mixed with about 30 parts of a pigment comprising an oxide of the Fe-Zn system and an oxide of the Fe - Co - Mn system in the ratio of 1:8, resulting in a brown coating. Further mixing a pigment comprising an oxide of the Ti - Zr system into the brown coating component results in a white coating.

The above coating is sprayed to be coated in a thickness of 10 - 100 µ on a zinc-plated steel sheet, an aluminum-plated steel sheet, and a low-quality stainless steel sheet of 13 or 18Cr system, which are previously subject to a pretreatment such as degreasing, rust removing, and sandblasting, and then the sprayed coating is baked at a temperature of 280 - 300°C for 20 minutes to form a coated film (here in a one-coating one-baking finish).

Next, referring to Fig. 2, the zinc-plated steel sheet forming the coated film is employed for the left and right sidewalls 10, 10 and the bottom panel 14 because the temperature reaches 250 - 300°C. The low-quality stainless steel sheet forming the above coated film is employed for the top panel 12 because provision of the heaters therein causes a maximum temperature to reach 800°C. The aluminum-plated steel sheet forming the above coated film is employed for the rear panel 16 because an outlet for a hot air for convection is provided thereon and thus a maximum temperature reaches 500°C. The zinc-plated steel sheet or the aluminum-plated steel sheet is employed for the front panel 18 of the oven portion 8 and for a contact face 22 (referred to Fig. 1) of the door portion contacting the front panel 18 because a temperature reaches around 300°C.

In the microwave oven structured as described above, the front panel 18 of the oven portion 8 and the contact face 22 of the door portion 6 are superior in resistivity to abrasiveness, contamination by food, tackiness and the like, and are stiffer compared to the conventional enameled steel sheet or the stainless steel coated with a heat-resistive ceramic coating. Thus, peeling-off of the coated film due to the opening/closing of the door portion 6 reduces to ensure high durability. Further, since the above coating has good resisting properties to corrosiveness, contamination by food, heat and the like, an acid component, an alkali component and the like discharged from an object to be cooked caused neither softening nor peeling-off of the coated film.

In case that punching holes are formed in a steel sheet on the inner surface of the oven portion 8, by punching processing, a coating containing a scaly mineral is preferably coated in a thickness of 150-250 µ on an external exposed surface of an edge portion from which the punching holes project. If a self-cleaning function is required for the inner surface of the oven, it is also possible to mix a known catalyst such as MnO₂, platinum or palladium in the coating shown in Table I to form a coated film.

According to this embodiment, steel sheets of low cost can be employed for those of the oven portion and the door portion, resulting in a decrease in cost of the microwave oven. Moreover, since the above coating satisfies all the properties of the microwave oven such as anti-corrosiveness, adhesiveness of the coated film at a high temperature and resistivity to contamination by food, the coating onto the steel sheet can be reduced to one-coating from the conventional three-coating, resulting in a reduction in cost and enhancements in productivity, durability or reliability. Further, as for the above coating, a coated film in which ceramics and a metal oxide are mixed is formed, so that a superior microwave oven exhibiting a shielding effect of a microwave can be obtained.

### Embodiment 2

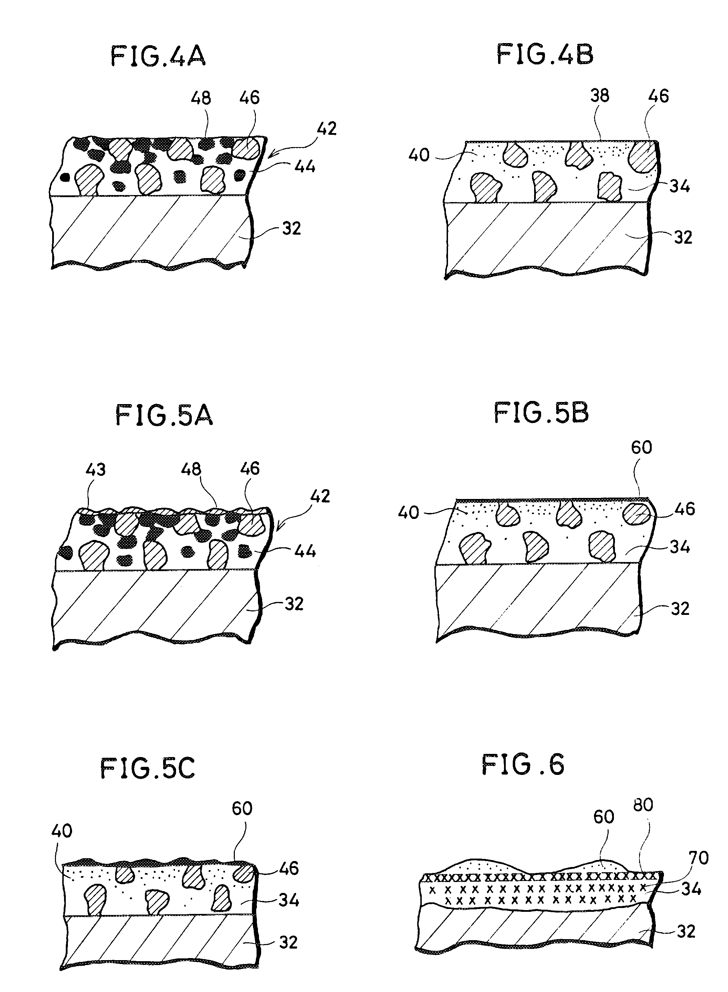

Figs. 4A and 4B schematically illustrates the steps of forming a film structure according to this embodiment of the present invention. Fig. 4A is a sectional view of the film structure before sintering, and Fig. 4B is a sectional view of the film structure after sintering.

Referring to Fig. 4A, a coating 42 is first coated on a substrate 32 by spraying to be finished in 10 - 40 µ. There is employed as the coating 42 a coating made by mixing a heat-resistive pigment 46 of a metal oxide or a composite oxide including Fe, Co, Mn, or Cr, fluororesin powders 48 (Phostaflon #9205 supplied by Hoechst Japan Ltd.), a thickener such as aluminum silicate, a silicone oil, and an organic solvent into an organic solvent varnish comprising poly-titano-carbosilane as a binder.

A general proportion of the mixture of those materials is shown in Table II below.

**Table II**

| | |
|---|---|
| Organic solvent varnish including Tilanocoat | 20 - 40 parts |
| Heat-resistive pigment | 20 - 40 parts |
| Phostaflon #9205 | 3 - 30 % |
| Thickener | 0.1 - 1.0 % |
| Silicone oil | 0.1 - 1.0 % |
| Organic solvent | 20 - 40 parts |

The above materials are mixed such that a specific gravity of the coating is 1.1. - 1.8 and a nonvolatile component thereof is 50 -70 %.

Further, the color of the coating can be black, brown or white due to components of the heat-resistive pigment, as described above.

An aluminum-plated steel sheet, which is previously subject to pretreatments such as degreasing, rust removing, and sandblasting, is employed for the substrate 32.

Next, after pre-dried at 160°C for 20 minutes, the resultant coating is baked at a temperature of 300 - 400°C for 20 minutes and then sintered, thereby forming a coated film shown in Fig. 4B.

Describing a mechanism of sintering which can be considered, baking at 300 - 400°C detailed conditions will be described later) causes poly-titano-carbosilane as the binder to become ceramic to form an aggregate of minute sintered ceramic particles (a ceramic layer 34). At the same time, the powders 48 of the fluororesin are melted, float up due to a difference in specific gravity and enter among the ceramic particles. Consequently, such a structure is formed that the fluororesin 40 is filled among the ceramic particles, so that the uppermost layer portion of the film structure is formed of a film of the fluororesin of a high concentration (a non-tacky resin layer 38). The film has the same structure as a coating of tetrafluoroethylene; however, it is significantly different in the point that the concentration of the non-tacky resin 40 becomes successively higher toward the upper layer portion of the ceramic layer 34, at an interface between the ceramic layer 34 and the non-tacky resin layer 38. Accordingly, the ceramic layer 34 becomes more adhesive to the non-tacky resin layer 38. Moreover, since a binded layer of the ceramic particles and the fluororesin is formed also in the inner portion of the ceramic layer 34, the film has good resisting properties to corrosiveness and occurrence of micro-cracks, and acts for protection against a scorch by food at a high temperature (300 - 400°C).

Next, a suitable method of coating, the amount of the fluororesin to be added and burning conditions are found in application of the second embodiment to the microwave oven shown in Figs. 1 and 2. The following embodiments 2A and 2B are carried out therefor. The aluminum-plated steel sheet or a stainless steel sheet of SUS430, SUS410 or SUS304 is employed for the both sidewalls 10, 10, the bottom panel 14, the rear panel 16 and the front panel 18 in.the inner compartment 8, and for a reverse surface 22 of the door 6 contacting the front panel 18 so as to be resistive to a temperature in the range of 250°C - 450°C. Since the top panel 12 comprises heaters (not shown) and thus a maximum temperature thereof reaches 800°C, a stainless steel sheet such as of SUS440 resistive to heat is employed for the top panel 12.

### Embodiment 2A

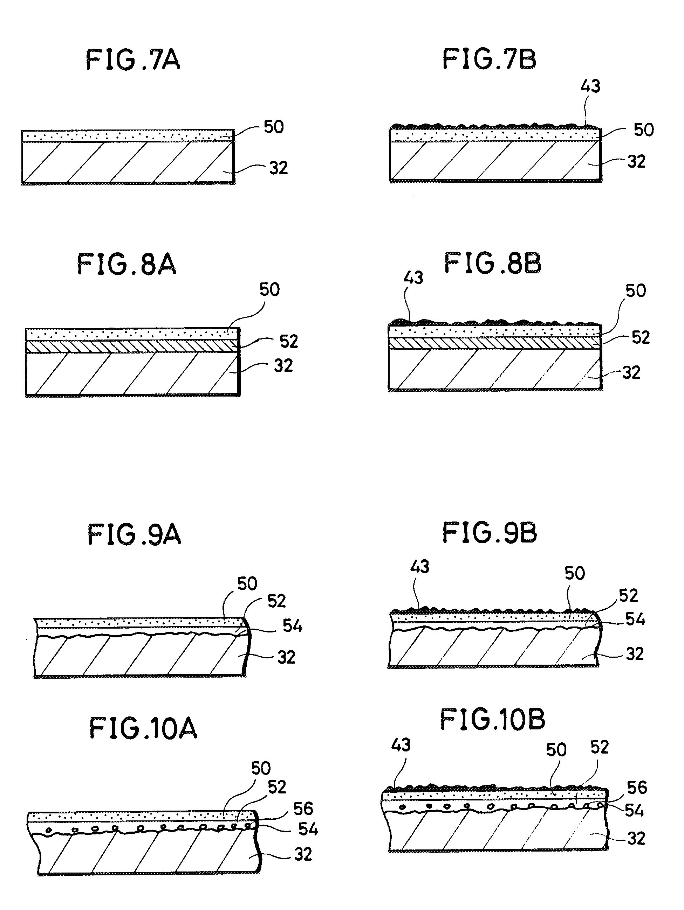

In the above described proportion of the mixture (Table II), a coating is formed, with the fluororesin powders (Phostaflon #9205 supplied by Hoechst Japan Ltd.) varied in percentage weight such as 3, 6, 8, 15, 20 % by weight. Another coating is also prepared with 0 % by weight of the fluororesin (i.e., a coating including no fluororesin). This coating is not in accordance with the present invention. Referring to Figs. 1 and 2, the coating including the fluororesin powders are coated on the sidewalls 10, 10, the bottom panel 14, the rear panel 16, the front panel 18 and the reverse surface 22 of the door 6 to be finished in 10 - 40 µ. The method of coating is as shown in Fig. 7A, that is, spraying a coating 50 on the substrate 32. The coating including no fluororesin powders is coated on the top panel 12 to be finished in 10 - 40 µ. Next, after pre-dried at 150°C for 20 minutes, the resultant coating is baked at a temperature of 300 - 400°C for 20 minutes.

### Embodiment 2B

In the described proportion of the mixture (Table II), a coating including no fluororesin is prepared. This coating is coated onto the sidewalls 10, 10, the bottom panel 14, the rear panel 16, the front panel 18, and the reverse surface 22 of the door 6 by spraying to be finished in 10 - 15 µ. This coating is coated on the top panel 12 to be finished in 10 - 40 µ. The method of coating is as shown in Fig. 8A, that is, spraying a coating 52 including no fluororesin on the substrate 32. Thereafter, the resultant coating is left at a room temperature to volatile an organic solvent. When no gloss can be seen on the surface, the coating 50 including the fluororesin powders in the range of 3 - 20 % by weight (3, 6, 8, 15, 20 % by weight are selected) is coated on the sidewalls, 10, 10, the bottom panel 14, the rear panel 16, the front panel 18 and the reverse surface 22 of the door 6 so that a thickness thereof is 10 - 20 µ after dry baking. Thereafter, the resultant coating is subject to pre-drying at 150°C for 20 minutes, and then baked at a temperature of 300 - 400°C for 20 minutes for hardening.

### The result and study of the embodiments 2A and 2B

### (1) A method of coating

As illustrated in the embodiment 2A (Fig. 7A), in case that only the coating 50 including the fluororesin is coated on the substrate 32, the coating is not set firmly on the finished surface and thus causes drippings, so that it cannot be coated thickly. As a result, the fluororesin powders cannot float on the upper layer portion, as shown in Fig. 4B, resulting in insufficient non-tackiness. Thus, this embodiment is not in accordance with the present invention. Further, due to the small thickness, there occur peeling-off and cracking, and a poor resisting property to corrosion and a poor durability are exhibited. On the other hand, such disadvantages do not occur in a dual-layer structure as in the embodiment 2B (Fig. 8A). That is, as shown in Fig. 4B, the fluororesin floats, thereby forming the fluororesin layer 38 at the uppermost layer portion of the coated surface. This results from the following reasons. That is, referring to Fig. 8A, when the coating 50 including the fluororesin is coated lapping over the undercoating 52, the organic solvent within the overcoating 50 permeates into the undercoating 52, thereby increasing a tackiness and causing no drippings. Therefore, a thick coating becomes available. Further, by this method, it is possible to dilute the coating 50 by a thinner and spray it so that the fluororesin powders can sufficiently rise to the surface. Consequently, it is possible to efficiently float the fluororesin as shown in Fig. 4B. This is also proved by the following facts. That is, if the undercoating 52 is forced to be dried at 80 - 150°C and then is coated with the overcoating 50, no fluororesin floats. Moreover, if the overcoating 50 is coated after baking the undercoating 52 at a high temperature of 300 - 320°C, there occurs peeling-off between layers.

### (2) The amount of the fluororesin powders to be added and baking conditions

Referring to the embodiment 2B, a test panel is made with the amount of the fluororesin powders to be added varied in percentage weight such as 3, 6, 8, 15, 20 % by weight, and three burning conditions are selected such as temperatures of 300 - 320°C, 330 - 360°C and 370 - 400°C for testing.

In baking at 300 - 320°C, even if the amount of the powders to be added is varied, oil drops scattered from fish or meat scorch on the coated film in cooking by a convection-type grill oven. A degree of the scorching is the same in any case with the amount of the powders to be added, and no significant difference in cleaning property can be found. However, it is found that the cleaning property enhances as more and more fluororesin powders are added.

The similar result is also obtained under the baking condition of 330 - 360°C.

In baking at 370 - 400°C, the coatings with 6, 8, 15 % by weight of the fluororesin added exhibit the best performance in long-lasting heat resistivity, anti-corrosiveness and durability. Although it is found that the coating with 20 % by weight of the fluororesin added also has a tendency to be powdered at the uppermost layer portion, the one with no obstacle for practical use is obtained.

A thermoplastic fluororesin (tetrafluoroethylene) is illustrated as a non-tacky resin in the above embodiment; however, the present invention is not limitative to this, and the same effect can be achieved in case with thermoplastic engineering plastic powders such as PPS and PES.

In embodiments 3 - 7 shown in Figs. 9A, 10A, 11A, 12A and 13A, the present invention is applied to the cooking surface of the electric hot plate shown in Fig. 3. The cooking surface of the electric hot plate to which the present invention is applied exhibits a good non-tackiness and cleanness in cooking at a high temperature in the range of 250 - 450°C. A method of manufacturing the coated film on the cooking surface will now be described.

### Embodiment 3

Referring to Fig. 9A, the cooking surface of the substrate 32 is baked with oil at 400°C and then is subjected to a shot blast to form an unevenness on the surface thereof. After a resultant rough surface 54 is cleaned, a coating 52 for undercoating including no fluororesin is coated on the rough surface 54 to be finished in 10 - 20 µ. After that, the resulting film is left at a room temperature to volatile an organic solvent, and then a coating 50 including 8 - 15 % by weight of the fluororesin is coated to be 10 - 30 µ finishing. The coating used here is identical to those shown in Table II and in the embodiments 4, 5, 6, and 7 which will be described later. Thereafter, the film is dried at 150°C for 20 minutes and then baked at 370 - 400°C for 20 minutes for hardening. The resultant cooking surface shows a good non-tackiness and cleanness.

### Embodiment 4

Referring to Fig. 10A, after the cooking surface of the substrate 32 is baked with oil at 400°C, it is subject to a shot blast to form an unevenness on the surface thereof. After the resulting rough surface 54 is cleaned, alumina-titania 56 of a ceramic quality is melted and injected onto the rough surface 54. After that, the coating 52 for undercoating including no fluororesin is coated in 10 -20 µ finishing. Next, the film is left at a room temperature to volatile the organic solvent, and then the coating 50 including 8 - 15 % by weight of the fluororesin is coated in 20 - 30 µ finishing. In this embodiment, since the alumina-titania 56 of the ceramic quality is melted and injected on the rough surface 54, a good adhesiveness can be obtained between the substrate 32 and the coated film.

### Embodiment 5

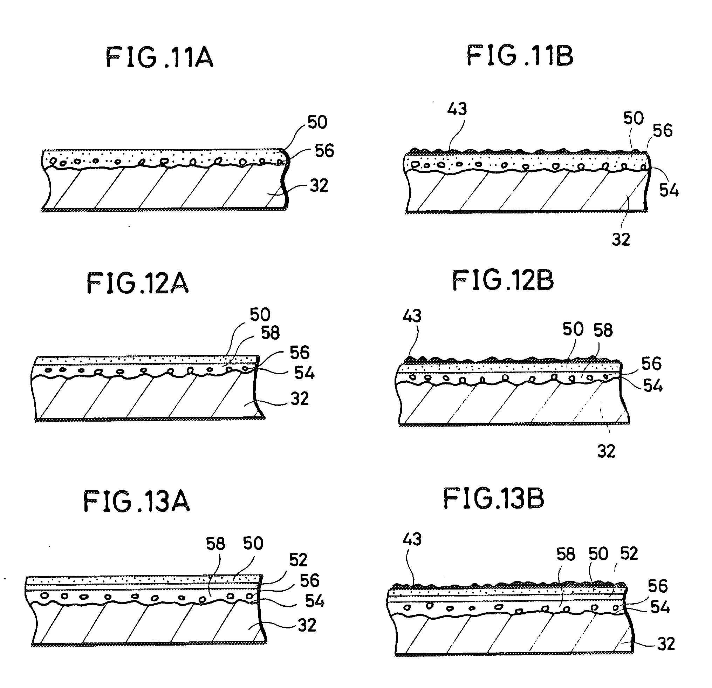

Referring to Fig. 11A, after the cooking surface of the substrate 32 is baked with oil at 400°C, it is subject to a shot blast to form an unevenness on its surface. After the resultant rough surface 54 is cleaned, the alumina-titania 56 of the ceramic quality is melted and injected onto the rough surface 54. Thereafter, the coating 50 including 8 - 15 % by weight of the fluororesin powders is coated in 20 - 40 µ finishing. The film exhibits a superior performance in non-tackiness and cleanness even in this embodiment. In this case, employing no undercoating results in a decrease in the manufacturing cost.

### Embodiment 6

Referring to Fig. 12A, after the cooking surface of the substrate 32 is baked with oil at 400°C, it is subject to a shot blast to form an unevenness on its surface. After the resulting rough surface 54 is cleaned, the alumina-titania 56 of the ceramic quality is melted and injected onto the rough surface 54. Thereafter, a silver-colored heat-resistive primer coating 58, which is mixed with aluminum, including poly-titano-carbosilane as a binder, is coated to be in 3 - 5 µ finishing. The film is then dried at a room temperature to volatile the solvent, and thereafter the coating 50 including 8 - 15 % by weight of the fluororesin is coated to be in 20 - 40 µ finishing. Since the primer coating 58 is employed in this embodiment, anti-corrosiveness increases.

### Embodiment 7

Referring to Fig. 13A, after the cooking surface of the substrate 32 is baked with oil at 400°C, it is subjected to a shot blast to form an unevenness on its surface. The resulting rough surface 54 is cleaned, and then the alumina-titania 56 of the ceramic quality is melted and injected on the rough surface 54. Thereafter, the silver-colored heat-resistive primer coating 58, which is mixed with aluminum powders, including poly-titano-carbosilane as a binder, is coated to be in 3 - 5 µ finishing. After the film is then dried at a room temperature to volatile the solvent, the coating 52 including no fluororesin is coated in 10 -15 µ finishing. After that, the film is dried at a room temperature, and coated with the coating 50 including 8 - 15 % by weight of the fluororesin in 10 - 30 µ finishing. The resultant film is then dried at 150°C for 20 minutes, and sintered at a temperature of 370 - 400°C for 20 minutes. Anti-corrosiveness and adhesiveness are further enhanced in this embodiment.

### Embodiment 8

In the above described embodiment shown in Fig. 4B, in order to float the non-tacky resin 40 on the surface, the greatest care should be taken for viscosity of the coating, a thickness of the coated film and the like, and thus it is difficult to find out optimum conditions thereof. The following embodiments are presented to serve as solutions for such disadvantages.

Figs. 5A, 5B and 5C schematically illustrate the steps of forming the film structure according to this embodiment.

Fig. 5A is a sectional view of the film before sintering, and Figs. 5B and 5C are sectional views of the film after sintering.

First, referring to Fig. 5A, the coating 42 mixed in the proportion shown in Table II is coated on the substrate 32 by spraying to be in 10 - 40 µ finishing.

Next, after pre-drying (150°C, 20 minutes) or drying at a room temperature, a dispersion-type tetrafluoroethylene resin (for example, "Silkware (EK-4609BK)" of black supplied by Daikin Kogyo Co., Ltd.), which is a liquid coating of the fluororesin, is coated thinly, in a mottled and streaked manner or in a continuous pattern of a thin film. Subsequently, after drying at a room temperature or pre-drying at 150°C for 20 minutes and then sintering at a temperature of 380 - 420°C for 20 - 30 minutes, a coated film shown in Fig. 5B or 5C is formed.

Fig. 5B is a sectional view of the film after sintering when the dispersion-type tetrafluoroethylene resin coating is coated in the continuous pattern of a thin film. Fig. 5C is a sectional view of the film finished by thinly coating the dispersion-type tetrafluoroethylene resin coating in the mottled and streaked manner.

Referring to Figs. 5B and 5C, a ceramic layer 34 including poly-titano-carbosilane, which is a principal component being made ceramic, is formed on the substrate 32. The ceramic layer 34 includes a non-tacky resin 40 therein. The concentration of the non-tacky resin 40 increases upward and is 100 % at the uppermost layer portion. On the ceramic layer 34, there is reliably formed a fluororesin layer 60 resulting from the dispersion-type fluororesin coating with the tetrafluoroethylene resin as a principal component.

In this embodiment, as the amount of the non-tacky resin powders 40 to be added in the ceramic layer 34 is set equal to or higher than 20 %, a strength of the surface layer sharply decreases, resulting in a fragile film. As a result, the film is liable to be cracked by nails and to be peeled off and thus lose non-tackiness gradually. Therefore, the amount of the non-tacky resin powders 40 to be added is preferably equal to or lower than 20 %.

The film structure formed as described above is hard and hence is not cracked by contacting a metal pallet, enameled utensils, or stainless cooking utensils. Further, even if oil drops of food to be cooked are adhered to and scorched firmly to the film, they can be easily removed, and thus there are few remarkable stains left after removal of the scorches. Further, the film is durable up to a high temperature of 450°C and has a good adhesiveness.

Referring to Fig. 5A, a mechanism of the sintering which can be considered will now be described. First, an overcoating which is a dispersion-type fluororesin coating is coated on a half-burned undercoating whose principal components are an organic solvent varnish including Tilanocoat, and a heat-resistive pigment. As a result, a solvent such as of toluene interacts and dissolves between a coated film layer of the undercoating and that of the overcoating, forming a mixed interlayer between those film layers. When the resultant film layer is then sintered at 380 - 420°C, fluororesin powders of the undercoating and dispersion-type fluororesin particles of the overcoating are mixed and melted by heat, and further bonded firmly together to be integrated. At this time, if the film is sintered longer, the fluororesin of the undercoating and that of the overcoating are highly melted, so that no peeling-off occurs between the layers even when the layer of the overcoating is thick. In this case, referring to Fig. 6, mixing several percent of potassium titanate fibers 70 into an undercoating 34 causes a further enhanced adhesiveness, thereby preventing micro-cracks, a specific defect of ceramics. Next, a description will be given on the reason for the enhanced adhesiveness due to mixing the potassium titanate fibers 70 into the undercoating 34. Referring to Fig. 6, the ceramic layer 34 is formed on the substrate 32. The potassium titanate fibers 70 are mixed in the ceramic layer 34. The fluororesin layer 60 is formed on the ceramic layer 34. A composite layer 80 in which the potassium titanate fibers 70 are mixed into the fluororesin layer, is formed at the boundary portion of the ceramic layer 34 and the fluororesin layer 60. An enhancement in adhesiveness of the film results from the presence of this composite layer 80. To simplify the Fig. 6, no pigment particles are illustrated in the figure.

Such a case will now be described that this embodiment is applied to the microwave oven shown in Figs. 1 and 2 (Embodiments 8A and 8B).

### Embodiment 8A

A coating including fluororesin powders is formed in the proportion shown in Table II. Meanwhile, another coating with 0% by weight of the fluororesin (that is, the coating including no fluororesin) is also prepared. The latter coating is not in accordance with the present invention. Referring to Figs. 1 and 2, the coating including the fluororesin powders is coated on the sidewalls 10, 10, the bottom panel 14, the rear panel 16, the front panel 18 and the reverse surface 22 of the door 6 to be in 10 - 40 µ finishing. A method of coating is as shown in Fig. 7B. That is, the coating 50 including the fluororesin is sprayed on the substrate 32. After a solvent is then volatiled by drying at a room temperature or by pre-drying at 150°C for 20 minutes, a dispersion-type liquid coating 43 of a tetrafluoroethylene resin is coated thinly, in a mottled and streaked manner or in a continuous pattern of a thin film. The above coating including no fluororesin powders is coated on the top panel 12 in a thickness to be in 10 - 40 µ finishing. After pre-dried at 150°C for 20 minutes, the film is baked for hardening at a temperature of 380 - 420°C for 20 minutes. The resultant film has a good non-tackiness.

### Embodiment 8B

A coating including no fluororesin is prepared in the proportion shown in Table II. This coating is sprayed on the sidewalls 10, 10, the bottom panel 14, the rear panel 16, the front panel 18, and the reverse surface 22 of the door 6 to be in 10 -15 µ finishing. The coating including no fluororesin is coated on the top panel 12 to be in 10 - 40 µ finishing. The method of coating is as shown in Fig. 8B. That is, the coating 52 including no fluororesin is coated on the substrate 32 by spraying. Thereafter, the coated film is left at a room temperature to volatile an organic solvent. When no gloss can be seen on its surface, a coating 50 including 3 - 20 % by weight of the fluororesin powders is coated on the front panel 18 and the reverse surface 22 of the door 6 such that a thickness thereof is 10 - 20 µ after dry-baking. After the film is left and dried at a room temperature or pre-dried at 150°C for 20 minutes, the dispersion-type liquid coating 43 of a tetrafluoroethylene resin is coated thinly, in a mottled and streaked manner or in the continuous pattern of a thin film. Then, after pre-drying at 150°C for 20 minutes, the film is baked for hardening at a temperature of 380°C - 420°C for 20 -30 minutes. The resultant coated film has a good non-tackiness.

In embodiments 9 - 13 shown in Figs. 9B, 10B, 11B, 12B and 13B, the method shown in Fig. 5A is applied to the cooking surface of the electric hot plate. The cooking surface of the electric hot plate to which the present invention is applied exhibits a good non-tackiness and cleanness in cooking at a high temperature in the range of 250 - 450°C. A detailed description will be given as follows.

### Embodiment 9

Referring to Fig. 9B, after the cooking surface of the substrate 32 is baked with oil at 400°C, it is subject to a shot blast to form an unevenness on its surface. After the resultant rough surface 54 is cleaned, the coating 52 for undercoating including no fluororesin is coated to be in 10 - 20 µ finishing. Thereafter, the resulting film is left at a room temperature to volatile an organic solvent, and then the coating 50 including 8 - 15 % by weight of the fluororesin is coated to be in 10 - 30 µ finishing. The utilized coating is the same as the coating in the embodiment 8. The same coating will be employed in the following embodiments. After the film is left at a room temperature or dried at 150°C for 20 minutes, it is coated with the dispersion type liquid coating 43 of a tetrafluoroethylene resin and then pre-dried at 150°C for 20 minutes to be baked for hardening at a temperature of 380 - 420°C for 20 - 30 minutes. The resultant coated film has a good non-tackiness.

### Embodiment 10

Referring to Fig. 10B, after the cooking surface of the substrate 32 is baked with oil at 400°C, it is subject to a shot blast to form an unevenness on its surface. After the resulting rough surface 54 is then cleaned, alumina-titania 56 of the ceramic quality is melted and injected onto the rough surface 54. After that, the coating 52 for undercoating including no fluororesin is coated to be in 10 - 20 µ finishing. After the film is left at a room temperature to volatile the organic solvent, it is coated with the coating 50 including 8 - 15 % by weight of the fluororesin to be in 20 - 30 µ finishing. After the film is then left at a room temperature or dried at 150°C for 20 minutes, it is coated with the dispersion type liquid coating 43 of the tetrafluoroethylene resin and then pre-dried at 150°C for 20 minutes to be baked for hardening at a temperature of 380 - 420°C for 20 - 30 minutes. The resulting coated film has a good non-tackiness.

### Embodiment 11

Referring to Fig. 11B, after the cooking surface of the substrate 32 is baked with oil at 400°C, it is subject to a shot blast to form an unevenness on its surface. After the resultant rough surface 54 is then cleaned, the alumina-titania 56 of the ceramic quality is melted and injected onto the rough surface 54. After that, the coating 50 including 8 - 15 % by weight of fluororesin powders is coated to be in 20 - 40 µ finishing. After the film is then left at a room temperature or dried at 150°C for 20 minutes, it is coated with the dispersion type liquid coating 43 of the tetrafluoroethylene resin and then pre-dried at 150°C for 20 minutes to be baked for hardening at a temperature of 380 - 420°C for 20 - 30 minutes. The resulting coated film has a good non-tackiness.

### Embodiment 12

Referring to Fig. 12B, after the cooking surface of the substrate 32 is baked with oil at 400°C, it is subject to a shot blast to form an unevenness on its surface. After the resultant rough surface 54 is then cleaned, the alumina-titania 56 is melted and injected onto the rough surface 54. After that, the silver-colored heat-resistive primer coating 58, which is mixed with aluminum powders, including poly-titano-carbosilane as a binder, is coated to be in 3 - 5 µ finishing. After the film is then dried at a room temperature to volatile the solvent, it is coated with the coating 50 including 8 - 15 % by weight of the fluororesin to be in 20 - 40 µ finishing. After the film is left at a room temperature or dried at 150°C for 20 minutes, it is coated with the dispersion type liquid coating 43 of the tetrafluoroethylene resin and then pre-dried at 150°C for 20 minutes to be baked for hardening at a temperature of 380 - 420°C for 20 - 30 minutes. The resulting coated film has a good non-tackiness.

### Embodiment 13

Referring to Fig. 13B, after the cooking surface of the substrate 32 is baked with oil at 400°C, it is subject to a shot blast to form an unevenness on its surface. After the resultant rough surface 54 is then cleaned, the alumina-titania 56 is melted and injected onto the rough surface 54. Thereafter, the silver-colored heat-resistive primer coating 58 which is mixed with the aluminum powders, including poly-titano-carbosilane as a binder, is coated to be in 3 - 5 µ finishing. After the film is dried at room temperature to volatile the solvent, it is coated with the coating 52 including no fluororesin to be in 10 - 15 µ finishing. Then, the film is dried at a room temperature and coated with the coating 50 including 8 - 15 % by weight of the fluororesin to be in 10 - 30 µ finishing. Thereafter, the film is forced to be dried at 150°C for 20 minutes to volatile the organic solvent component. Then, the dispersion type liquid coating 43 of the tetrafluoroethylene resin is coated thinly, in a mottled or streaked manner, or in the continuous pattern of a thin film, and thus after pre-dried at 150°C for 20 minutes, the film is baked for hardening at a room temperature of 380 - 420°C for 20 - 30 minutes. The resulting coated film has a good non-tackiness.

Although the microwave oven and the electric hot plate are presented as examples in the above embodiments, the present invention is also applicable to other high temperature cooking apparatuses.

As has been described heretofore, in the structure of the film for the high temperature cooking apparatus according to the present invention, the film is formed of ceramics, including poly-titano-carbosilane as its principal component, resulting in such a film that satisfies resisting properties to corrosiveness and contamination by food, and an adhesiveness of the coated film at a high temperature. Further, in case that the fluororesin layer is further formed on the ceramic layer, the film structure with a further enhanced non-tackiness can be obtained. If such a film structure is formed on the inner surface of the microwave oven i.e., the high temperature cooking apparatus, the cooking surface of the electric hot plate and so on, the high temperature cooking apparatus exhibits a superior performance in heat-resistivity and non-tackiness.

The invention being thus described, it will be obvious that the same may be varied in many ways. Such variations are not to be regarded as a departure from the scope of the invention as defined in the appended claims.

## Claims

1. A film for a high temperature cooking apparatus, provided on a substrate (32) forming a surface (10; 12; 14; 16; 18; 22; 25) for said high temperature cooking apparatus, the film comprising:
a ceramic layer (34; 50) including ceramic poly-titano-carbosilane and a non-tacky resin (40), provided over said substrate; and
a non-tacky resin layer (38; 43; 60) including a non-tacky resin, provided on said ceramic layer;
wherein the concentration of said non-tacky resin included in said ceramic layer progressively increases towards the upper surface of the ceramic layer.

2. A film as claimed in claim 1, wherein said non-tacky resin (38; 40; 43; 60) includes a fluoro resin.

3. A film as claimed in claim 1 or claim 2, wherein said ceramic layer (34; 50) includes a heat-resistive pigment (46) being made of a heat-resistive metal oxide or composite oxide.

4. A film as claimed in any preceding claim, wherein said ceramic layer (34) includes potassium titanate fibers (70).

5. A method of forming a film on a substrate (32) forming a surface (10; 12; 14; 16; 18; 22; 25) for a high temperature cooking apparatus, characterised by the steps of:
blending a non-tacky resin (48) into an organic solvent varnish including poly-titano-carbosilane, so as to form a coating material having a specific gravity of between approximately 1.1 and 1.8 and a non-volatile component of between approximately 50% and 70%;
coating said coating material over said substrate (32);
pre-drying the resultant coating (42); and
sintering the coating at a temperature above 300°C so as to form a ceramic layer (34; 50), including ceramic poly-titano-carbosilane, having a concentration of the non-tacky resin (48) which progressively increases towards the upper surface thereof, such that the uppermost portion of the ceramic layer substantially comprises non-tacky resin.

6. A method as claimed in claim 5, including, before said sintering step, coating a liquid coating (43; 60) of a dispersion-type non-tacky resin on said pre-dried coating (42).

7. A method according to claim 6 wherein said liquid coating (43; 60) is coated in a mottled and streaked manner.

8. A method according to claim 6, wherein said liquid coating (60) of a dispersion-type non-tacky resin is coated in a continuous pattern of a thin film.

9. A method according to any one of claims 6 to 8, wherein said liquid coating (43; 60) is coated to have a thickness equal to or lower than 10 µm after sintering.

10. A method according to any one of claims 5 to 9, wherein said non-tacky resin (43; 48; 60) includes a fluoro resin.

11. A method according to claim 10, wherein the amount of said fluoro resin to be added is 6-15% by weight of the overall weight of said organic solvent varnish.

12. A method according to any one of claims 5 to 11, wherein said sintering is performed at a temperature in the range of 370-400°C.

## Patentansprüche

1. Schicht für eine Hochtemperatur-Kochvorrichtung, welche auf einem Substrat (32) unter Ausbildung einer Oberfläche (10; 12; 14; 16; 18; 22; 25) für die Hochtemperatur-Kochvorrichtung vorgesehen ist, wobei die Schicht:
eine über dem Substrat vorgesehene Keramikschicht (34; 50), die ein keramisches Polytitano-Carbosilan und ein nichtklebriges Harz (40) beinhaltet; und
eine auf der Keramikschicht vorgesehene nichtklebrige Harzschicht (38; 43; 60), welche ein nichtklebriges Harz beinhaltet, umfaßt;
wobei die Konzentration des in der Keramikschicht beinhalteten, nichtklebrigen Harzes in Richtung der oberen Oberfläche der Keramikschicht progressiv zunimmt.

2. Schicht nach Anspruch 1, wobei das nichtklebrige Harz (38; 40; 43; 60) ein Fluorharz umfaßt.

3. Schicht nach Anspruch 1 oder Anspruch 2, wobei die Keramikschicht (34; 50) ein wärmebeständiges Pigment (46) umfaßt, das aus einem wärmebeständigen Metalloxid oder einem zusammengesetzten Oxid hergestellt ist.

4. Schicht nach mindestens einem der vorangehenden Ansprüche, wobei die Keramikschicht (34) Kaliumtitanatfasern (70) umfaßt.

5. Verfahren zur Bildung einer Schicht auf einem Substrat (32) unter Ausbildung einer Oberfläche (10; 12; 14; 16; 18; 22; 25) für eine Hochtemperatur-Kochvorrichtung, gekennzeichnet duch die Schritte:
Einmischen eines nichtklebrigen Harzes (48) in einen Polytitano-Carbosilan beinhaltenden Lack auf Basis eines organischen Lösungsmittels, um so ein Beschichtungsmaterial mit einer relativen Dichte zwischen etwa 1,1 und 1,8 und einer nichtflüchtigen Komponente zwischen etwa 50 % und 70 % zu bilden;
Beschichten des Beschichtungsmaterials über das Substrat (32);
Vortrocknen der resultierenden Beschichtung (42); und
Sintern der Beschichtung bei einer Temperatur oberhalb 300 °C, um so eine Keramikschicht (34; 50) einschließlich keramischem Polytitano-Carbosilan mit einer Konzentration des nichtklebrigen Harzes (48), welche progressiv in Richtung der oberen Oberfläche hiervon zunimmt, zu bilden, so daß der oberste Bereich der Keramikschicht im wesentlichen nichtklebriges Harz umfaßt.

6. Verfahren nach Anspruch 5, umfassend, vor dem Sinterschritt, das Beschichten einer Flüssigbeschichtung (43; 60) eines nichtklebrigen Harzes vom Dispersionstyp auf die vorgetrocknete Beschichtung (42).

7. Verfahren nach Anspruch 6, wobei die Flüssigbeschichtung (43; 60) in marmorierter und gemaserter bzw. streifenartiger Weise aufbeschichtet wird.

8. Verfahren nach Anspruch 6, wobei die Flüssigbeschichtung (60) eines nichtklebrigen Harzes vom Dispersionstyp in einem kontinuierlichen Muster aus einem dünnen Film aufbeschichtet wird.

9. Verfahren nach mindestens einem der Ansprüche 6 bis 8, wobei die Flüssigbeschichtung (43; 60) in der Weise aufbeschichtet wird, daß sie eine Dicke von gleich oder weniger als 10 µm nach dem Sintern besitzt.

10. Verfahren nach mindestens einem der Ansprüche 5 bis 9, wobei das nichtklebrige Harz (43; 48; 60) ein Fluorharz umfaßt.

11. Verfahren nach Anspruch 10, wobei die Menge des zuzusetzenden Fluorharzes 6-15 Gew.-% des Gesamtgewichts des Lackes auf Basis eines organischen Lösungsmittels beträgt.

12. Verfahren nach mindestens einem der Ansprüche 5-11, wobei das Sintern bei einer Temperatur im Bereich von 370-400 °C durchgeführt wird.

## Revendications

1. Couche mince pour un appareil de cuisson à haute température, disposée sur un substrat (32) formant une surface (10 ; 12 ; 14 ; 16 ; 18 ; 22 ; 25) pour ledit appareil de cuisson à haute température, la couche mince comprenant :
une couche de céramique (34 ; 50) incluant un poly-titano-carbosilane céramique et une résine non collante (40), disposée sur ledit substrat ; et
une couche de résine non collante (38 ; 43 ; 60) incluant une résine non collante, disposée sur ladite couche de céramique ;
dans laquelle la concentration de ladite résine non collante incluse dans ladite couche de céramique augmente progressivement vers la surface supérieure de la couche de céramique.

2. Couche mince selon la revendication 1, dans laquelle ladite résine non collante (38 ; 40 ; 43 ; 60) comprend une résine fluorée.

3. Couche mince selon la revendication 1 ou la revendication 2, dans laquelle ladite couche de céramique (34 ; 50) comprend un pigment résistant à la chaleur (46) fait d'un oxyde métallique ou d'un oxyde composite, résistant à la chaleur.

4. Couche mince selon l'une quelconque des revendications précédentes, dans laquelle ladite couche de céramique (34) comprend des fibres de titanate de potassium (70).

5. Procédé de formation d'une couche mince sur un substrat (32) formant une surface (10 ; 12 ; 14 ; 16 ; 18 ; 22 ; 25) pour un appareil de cuisson à haute température, caractérisé par les étapes de :
mélange d'une résine non collante (48) dans un vernis à solvant organique, contenant du poly-titano-carbosilane, de façon à former une matière de revêtement ayant un poids spécifique situé entre environ 1,1 et 1,8 et une teneur en composant non volatil située entre environ 50 % et 70 % ;
dépôt en revêtement de ladite matière de revêtement sur ledit substrat (32) ;
pré-séchage du revêtement résultant (42) ; et
frittage du revêtement à une température supérieure à 300 °C de façon à former une couche de céramique (34 ; 50), incluant un poly-titano-carbosilane céramique, ayant une concentration en résine non collante (48) qui augmente progressivement vers sa surface supérieure, de sorte que la partie la plus supérieure de la couche de céramique soit sensiblement constituée par la résine non collante.

6. Procédé selon la revendication 5, incluant, avant ladite étape de frittage, le dépôt d'un revêtement liquide (43 ; 60) constitué d'une résine non collante du type dispersion sur ledit revêtement pré-séché (42).

7. Procédé selon la revendication 6, dans lequel ledit revêtement liquide (43 ; 60) est déposé sous forme de stries et de taches.

8. Procédé selon la revendication 6, dans lequel ledit revêtement liquide (60) constitué d'une résine non collante du type dispersion est déposé suivant un motif continu en couche mince.

9. Procédé selon l'une quelconque des revendications 6 à 8, dans lequel ledit revêtement liquide (43 ; 60) est déposé pour avoir une épaisseur égale ou inférieure à 10 µ après frittage.

10. Procédé selon l'une quelconque des revendications 5 à 9, dans lequel ladite résine non collante (43 ; 48 ; 60) comprend une résine fluorée.

11. Procédé selon la revendication 10, dans lequel la quantité de ladite résine fluorée à ajouter est de 6 à 15 % en poids du poids total dudit vernis à solvant organique.

12. Procédé selon l'une quelconque des revendications 5 à 11, dans lequel ledit frittage est effectué à une température située dans la plage de 370 à 400 °C.
